# EUROPÄISCHE PATENTANMELDUNG

(11) **EP 3 358 688 A1**
(43) Veröffentlichungstag der Anmeldung: **08.08.2018**
(21) Anmeldenummer: 17210793.0
(22) Anmeldetag: 28.12.2017
(51) Int. Cl.: H02B 1/56, F03D 80/60

(54) **KÜHLEINRICHTUNG ZUM KÜHLEN EINER ENERGIETECHNISCHEN ANLAGE**

(30) Priorität: 07.02.2017 DE 102017201889
(71) Anmelder: Siemens Aktiengesellschaft, 80333 München (DE)
(72) Erfinder: Boschert, Stefan, 85579 Neubiberg (DE); Heinrich, Christoph, 86609 Donauwörth (DE); Papadopoulos, Theodoros, 80333 München (DE)

(57) **Zusammenfassung**

Die erfindungsgemäße Kühleinrichtung (KE) zum Kühlen einer energietechnischen Anlage (OT) umfasst einen mit der energietechnischen Anlage (OT) thermisch koppelbaren Wärmetauscher (RAD) zur Wärmeabfuhr durch eine natürliche Windströmung (WS) sowie eine oder mehrere bewegliche, vor einer windzugewandten Seite des Wärmetauschers (RAD) angeordnete Windleitplatten (WP). Die energietechnische Anlage (OT) kann dabei insbeson-dere eine Offshore-Anlage und/oder ein Transformator oder ein Stromrichter sein. Die Kühleinrichtung (KE) verfügt weiterhin über einen Windrichtungsgeber (WG) zum Ermitteln einer Windrichtung sowie über ein mit dem Windrichtungsgeber (WG) gekoppeltes Einstellsystem (ES) zum Ausrichten einer jeweiligen Windleitplatte (WP) abhängig von der ermittelten Windrichtung, derart dass die Windströmung (WS) in den Wärmetauscher (RAD) umgelenkt wird.

## Beschreibung

In den letzten Jahren werden energietechnische Anlagen, wie zum Beispiel Windkraftwerke in zunehmendem Maße verteilt errichtet, insbesondere auf Offshore-Plattformen in der offenen See. Zur Verteilung der gewonnenen elektrischen Energie wird diese in der Regel vor Ort mittels Transformatoren und Gleichrichtern auf hohe Gleichspannungen transformiert und in dieser Form verlustarm per Kabel über weite Strecken übertragen.

Aufgrund des hohen Energieumsatzes führen indes auch relativ geringfügige Energie- oder Umwandlungsverluste zu einer starken Wärmeentwicklung, die geeignete Kühlungsmaßnahmen vor Ort erfordern. Hierfür werden insbesondere im Offshore-Bereich häufig windgekühlte Radiatoren als Wärmetauscher eingesetzt. Offensichtlich hängt die Kühlleistung dabei aber stark von den vorherrschenden Windverhältnissen ab. Obschon insbesondere im Offshore-Bereich meist geeignete Windverhältnisse herrschen, so ist dennoch dafür zu sorgen, dass auch an Tagen mit ungünstigen Windverhältnissen eine ausreichende Wärmeabfuhr sichergestellt ist. Aus diesem Grund werden windgekühlte Radiatoren häufig überdimensioniert und/oder mit Ventilatoren versehen, die eine ausreichende Luftströmung sicherstellen. Dies erhöht jedoch in der Regel einen Installations- und/oder Wartungsaufwand beträchtlich.

Es ist Aufgabe der vorliegenden Erfindung, eine Kühleinrichtung sowie eine damit ausgerüstete Offshore-Plattform anzugeben, die eine effizientere Kühlung einer energietechnischen Anlage erlauben.

Gelöst wird diese Aufgabe durch eine Kühleinrichtung mit den Merkmalen des Patentanspruchs 1 sowie durch eine Offshore-Plattform mit den Merkmalen des Patentanspruchs 13.

Erfindungsgemäß ist zum Kühlen einer energietechnischen Anlage eine Kühleinrichtung vorgesehen, die einen mit der energietechnischen Anlage thermisch koppelbaren Wärmetauscher zur Wärmeabfuhr durch eine natürliche Windströmung sowie eine oder mehrere bewegliche, vor einer windzugewandten Seite des Wärmetauschers angeordnete Windleitplatten aufweist. Die energietechnische Anlage kann dabei insbesondere eine Offshore-Anlage und/oder einen Transformator oder einen Stromrichter umfassen. Die Kühleinrichtung verfügt weiterhin über einen Windrichtungsgeber zum Ermitteln einer Windrichtung und über ein mit dem Windrichtungsgeber gekoppeltes Einstellsystem zum Ausrichten einer jeweiligen Windleitplatte abhängig von der ermittelten Windrichtung, derart dass die Windströmung in den Wärmetauscher umgelenkt wird.

Der Windrichtungsgeber kann dabei insbesondere eine Windfahne, einen Windsensor und/oder ein Anemometer umfassen.

Gemäß einem weiteren Aspekt der Erfindung ist eine Offshore-Plattform mit einer energietechnischen Anlage sowie mit einer erfindungsgemäßen Kühleinrichtung zum Kühlen der energietechnischen Anlage vorgesehen.

Durch die Umlenkung der Windströmung in den Wärmetauscher kann die Geschwindigkeit einer Luftströmung bzw. ein Strömungsdurchsatz durch den Wärmetauscher spezifisch in Fällen einer für die Durchströmung des Wärmetauschers ungünstigen Windrichtung erheblich gesteigert werden. Mit dem Strömungsdurchsatz erhöhen sich in der Regel auch die Wärmeabfuhr vom Wärmetauscher und damit die Wärmeabfuhr von der energietechnischen Anlage. Infolgedessen kann der Wärmetauscher einer erfindungsgemäßen Kühleinrichtung in vielen Fällen kleiner und ressourcenschonender dimensioniert werden als bei einer herkömmlichen Kühleinrichtung. Insbesondere kann häufig vermieden werden, den Wärmetauscher für seltene Extremsituationen auszulegen.

Vorteilhafte Ausführungsformen und Weiterbildungen der Erfindung sind in den abhängigen Ansprüchen angegeben.

Nach einer vorteilhaften Ausführungsform der Erfindung kann der Windrichtungsgeber eine Windfahne umfassen, und ein Kraftübertragungssystem kann zum Übertragen einer windbedingten Drehung der Windfahne auf eine Drehung einer jeweiligen Windleitplatte vorgesehen sein. Das Kraftübertragungssystem kann hierbei z.B. eine Zahnradwelle, einen Zahnriemen und/oder ein Gestänge umfassen. Auf diese Weise kann das Einstellsystem in vielen Fällen passiv und/oder ohne externe Energiezufuhr betrieben werden.

Weiterhin kann ein Stellmotor vorgesehen sein zum Drehen einer jeweiligen Windleitplatte abhängig von der vom Windrichtungsgeber ermittelten Windrichtung. Durch den Stellmotor kann eine Ausrichtung einer jeweiligen Windleitplatte fein reguliert und zweckgerichtet optimiert werden.

Darüber hinaus kann vorgesehen sein, dass ein Abstand zwischen einer jeweiligen Windleitplatte und dem Wärmetauscher geringer als eine 3fache, 2fache oder 1fache Breite der jeweiligen Windleitplatte ist. Aufgrund dieser relativ nahen Positionierung der jeweiligen Windleitplatte vor dem Wärmetauscher kann die Windströmung verlustarm in den Wärmetauscher umgeleitet werden.

Ferner kann der Wärmetauscher mehrere parallele Kühlflächen aufweisen, vor deren Stirnseiten jeweils eine Windleitplatte angeordnet ist. Durch eine solche Anordnung von Windleitplatten kann die Windströmung durch eine jeweilige Windleitplatte gezielt in einen jeweiligen Spalt zwischen zwei Kühlflächen umgelenkt werden.

Gemäß einer weiteren vorteilhaften Ausführungsform können mehrere Windleitplatten in einem gemeinsamen Rahmen angeordnet und gemeinsam bewegbar sein. Insbesondere können die Windleitplatten derart mechanisch oder anderweitig gekoppelt sein, dass eine Bewegung einer Windleitplatte sich auf eine oder mehrere andere Windleitplatten überträgt. Darüber hinaus kann der Rahmen als Ganzes fixiert oder als Ganzes drehbar sein.

Vorteilhafterweise kann eine jeweilige Windleitplatte um eine jeweilige senkrechte Drehachse drehbar gelagert sein. Mehrere Windleitplatten können dabei um ihre Drehachsen individuell oder gemeinsam drehbar sein. Aufgrund der senkrechten Ausrichtung der jeweiligen Drehachse übt das Gewicht der jeweiligen Windleitplatte kein nennenswertes Drehmoment auf diese aus. Infolgedessen kann die jeweilige Windleitplatte in der Regel mit geringem Kraftaufwand gedreht werden.

Insbesondere kann die jeweilige Windleitplatte derart um die jeweilige Drehachse gelagert sein, dass sie sich durch einen Druck der Windströmung zur Strömungsrichtung hin ausrichtet. Die Windleitplatte kann sich hierbei z.B. parallel zur Strömungsrichtung ausrichten oder sich zumindest in diese Richtung neigen. Vorteilhafterweise kann ein Rückstellelement, z.B. eine elastische Feder vorgesehen sein, so dass sich die jeweilige Windleitplatte in eine Richtung zwischen der Strömungsrichtung und einer jeweiligen Ruhestellung ausrichtet. Auf diese Weise kann die jeweilige Windleitplatte passiv und/oder ohne externe Kraft- oder Energiezufuhr ausgerichtet werden.

Insbesondere kann die jeweilige Drehachse bei einer Luv-Kante, d.h. bei einer angeströmten Vorderkannte der jeweiligen Windleitplatte positioniert sein. Aufgrund dieser Positionierung wird die jeweilige Windleitplatte durch die Windströmung grundsätzlich in Strömungsrichtung gedrückt.

Weiterhin kann bei einer Lee-Kante, d.h. bei einer der Luv-Kante gegenüber liegenden Hinterkante der jeweiligen Windleitplatte ein Strömungshindernis angeordnet sein. Außerdem kann eine jeweilige Windleitplatte perforiert sein. Eine solche Perforation bedingt einen Druckabfall in der darüber strömenden Luft, der wie ein Strömungshindernis wirkt. Durch das Strömungshindernis und/oder die Perforation wird die jeweilige Windleitplatte stärker in Strömungsrichtung gedrückt.

Ein Ausführungsbeispiel der Erfindung wird nachfolgend anhand der Zeichnung näher erläutert. Dabei zeigen jeweils in schematischer Darstellung:
- Figur 1: eine Offshore-Plattform mit einer erfindungsgemäßen Kühleinrichtung für eine energietechnische Offshore-Anlage,
- Figur 2: eine erfindungsgemäße Kühleinrichtung in detaillierterer Darstellung,
- Figuren 3A und 3B: verschiedene Einstellungen von Windleitplatten der Kühleinrichtung bei unterschiedlichen Windrichtungen und
- Figur 4: eine Windleitplatte in Aufsicht.

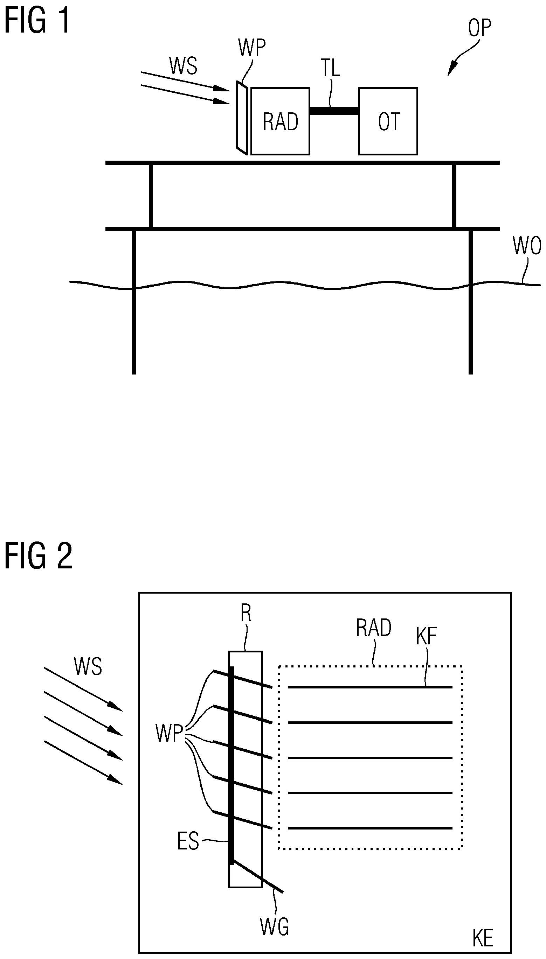

Figur 1 veranschaulicht eine auf offener See zu betreibende Offshore-Plattform OP mit einer zu kühlenden energietechnischen Offshore-Anlage OT. Die Offshore-Plattform OP trägt als Aufbauten oberhalb einer durch eine Wellenlinie angedeuteten Wasseroberfläche WO die energietechnische Offshore-Anlage OT sowie einen mit dieser thermisch gekoppelten Wärmetauscher RAD, vor dem Windleitplatten WP angeordnet sind. Die Offshore-Anlage OT kann beispielsweise ein Offshore-Transformator oder ein Offshore-Stromrichter zum Transformieren bzw. Gleichrichten oder Wechselrichten der von einer Offshore-Windturbine (nicht dargestellt) erzeugten elektrischen Energie auf eine hohe Gleich- oder Wechselspannung sein. Alternativ oder zusätzlich kann die Offshore-Anlage OT auch eine andere Energieübertragungs- oder Energieumwandlungseinrichtung umfassend.

Der Wärmetauscher RAD, z.B. ein sogenannter Radiator, ist vorzugsweise windgekühlt und entzieht der Offshore-Anlage OT Wärme, die er über Kühlflächen an die darüber strömende Luft abgibt. Der Wärmetauscher RAD ist mittels einer Wärmeübertragungsleitung TL thermisch an die Offshore-Anlage OT gekoppelt. Durch die Wärmeübertragungsleitung TL wird Wärme von der Offshore-Anlage OT zum Wärmetauscher RAD transportiert, z.B. durch Wärmeleitung und/oder Austausch von Kühlöl, Kühlwasser oder anderen Kühlmedien.

Bei einem Offshore-Transformator als Offshore-Anlage OT kann über die Wärmeübertragungsleitung TL Transformatorenöl des Offshore-Transformators zwischen diesem und dem Wärmetauscher RAD ausgetauscht und durch den Wärmetauscher RAD gekühlt werden. Gerade bei Leistungstransformatoren ist darauf zu achten, dass deren Transformatorenöl eine kritische Temperatur nicht überschreitet. Oberhalb dieser kritischen Temperatur verschlechtern sich Isolationseigenschaften des Transformatorenöls beträchtlich, wodurch ein elektrischer Funkenüberschlag mit hohem Zerstörungspotential im Transformator verursacht werden könnte.

Der Wärmetauscher RAD wird von einer natürlichen Windströmung WS angeströmt, die durch die beweglichen, vor einer windzugewandten Seite des Wärmetauschers RAD angeordneten Windleitplatten WP in den Wärmetauscher RAD umgelenkt wird.

Der mit den Windleitplatten WP versehene Wärmetauscher RAD gehört zu einer erfindungsgemäßen Kühleinrichtung KE, die in Figur 2 zur Veranschaulichung ihrer Wirkungsweise in Aufsicht schematisch dargestellt ist. Im Übrigen werden in Figur 2 für entsprechende Entitäten die gleichen Bezugszeichen verwendet wie in Figur 1.

Die Kühleinrichtung KE umfasst einen windgekühlten Wärmetauscher RAD mit einer Vielzahl von Kühlflächen KF, die eine große vom Wind überstrichene Oberfläche aufweisen. Die Kühlflächen KF sind senkrecht angeordnet, um Luftkonvektion zwischen den Kühlflächen KF zu begünstigen. Darüber hinaus ist der Wärmetauscher RAD in eine vorherrschende Windrichtung, insbesondere in Ost-West-Richtung ausgerichtet. Es sei beispielhaft angenommen, dass der Wärmetauscher RAD einer Windströmung WS ausgesetzt ist, die von der vorherrschenden Windrichtung abweicht und entsprechend schräg zu den Kühlflächen KF verläuft.

Die Kühleinrichtung KE verfügt über mehrere Windleitplatten WP, z.B. Windleitbleche, die jeweils um eine individuelle senkrechte Drehachse drehbar gelagert sind. Die Windleitplatten WP sind vor einer windzugewandten Seite des Wärmetauschers RAD, d.h. in Strömungsrichtung vor dem Wärmetauscher RAD angeordnet. Die Windleitplatten WP dienen zum verlustarmen Umlenken der Windströmung WS in den Wärmetauscher RAD. Vorzugsweise ist vor jeder Kühlfläche KF eine eigene Windleitplatte WP positioniert, um die Windströmung WS gezielt in einen jeweiligen Spalt zwischen zwei Kühlflächen KF umzulenken.

Die Kühleinrichtung KE umfasst weiterhin einen Windrichtungsgeber WG zum Ermitteln einer Richtung der Windströmung WS. Vorzugsweise wird diese Windrichtung relativ zur Richtung der Kühlflächen KF ermittelt. Der Windrichtungsgeber WG kann z.B. eine Windfahne, einen Windsensor und/oder ein Anenometer umfassen.

Die Windleitplatten WP und der Windrichtungsgeber WG sind im vorliegenden Ausführungsbeispiel in einem gemeinsamen Rahmen R angeordnet. Der Rahmen R ist vor einer windzugewandten Stirnseite des Wärmetauschers RAD derart positioniert, dass ein Abstand zwischen den Windleitplatten WP und der Stirnseite des Wärmetauschers RAD geringer als die dreifache, zweifache oder einfache Breite einer jeweiligen Windleitplatte WP ist. Vorzugsweise ist der Rahmen R unmittelbar vor der Stirnseite derart positioniert, dass die Windleitplatten WP noch frei drehbar sind.

Der Rahmen R verfügt im vorliegenden Ausführungsbeispiel über ein Einstellsystem ES, das mit den Windleitplatten WP sowie mit dem Windrichtungsgeber WG, z.B. mechanisch, elektromechanisch und/oder elektrische gekoppelt ist. Das Einstellsystem ES dient zum gemeinsamen oder individuellen Ausrichten der Windleitplatten WP abhängig von der vom Windrichtungsgeber WG ermittelten Windrichtung. Die Ausrichtung der Windleitplatten WP erfolgt derart, dass die Windströmung WS in den Wärmetauscher RAD verlustarm umgelenkt wird. Zu diesem Zweck werden die Windleitplatten WP vorzugsweise in eine Richtung zwischen der ermittelten Windrichtung und der Ausrichtung der Kühlflächen KF gedreht.

Das Einstellsystem ES kann in einer passiven oder aktiven Variante realisiert werden. Beide Varianten können auch kombiniert werden.

In der passiven Variante umfasst der Windrichtungsgeber WG eine Windfahne und das Einstellsystem ES ein Kraftübertragungssystem zum Übertragen einer windbedingten Drehung der Windfahne auf eine Drehung einer jeweiligen Windleitplatte WP um deren senkrechte Drehachse. Diese Übertragung kann durch mechanische Kraftübertragung bzw. Drehmomentübertragung mittels einer Zahnradwelle, einem Zahnriemen, einem Gestänge etc. erfolgen. Ggf. kann das Kraftübertragungssystem ein Getriebe umfassen. Alternativ oder zusätzlich kann das Kraftübertragungssystem elektromechanische oder elektrische Komponenten aufweisen. Vorzugsweise wird die Drehung der Windfahne durch eine geeignete mechanische oder elektromechanische Übersetzung von z.B. ca. 2:1 auf die Windleitplatten WP übertragen, so dass wenn sich die Windfahne in Windrichtung dreht, die Windleitplatten WP vorzugsweise in eine Richtung zwischen der Windrichtung und der Ausrichtung der Kühlflächen KF gedreht werden. Auf diese Weise wird die Windströmung WS verlustarm in den Wärmeaustauscher RAD umgelenkt und so eine Geschwindigkeit der Luftströmung über die Kühlflächen KF im Wärmetauscher RAD und damit deren Wärmeabfuhr erhöht. Ein solches passives Einstellsystem ES kann in vielen Fällen ohne externe Energiezufuhr betrieben werden und erweist sich in der Regel als sehr wartungsfreundlich.

Die aktive Variante des Einstellsystems ES umfasst einen oder mehrere Stellmotoren zum Drehen einer jeweiligen Windleitplatte WP abhängig von der vom Windrichtungsgeber WG ermittelten Windrichtung. Dabei kann ein Stellmotor vorgesehen sein, der über ein Kraftübertragungssystem (z.B. wie oben beschrieben) die Windleitplatten WP gemeinsam dreht. Alternativ oder zusätzlich können mehrere Stellmotoren vorgesehen sein, die jeweils eine Windleitplatte WP individuell drehen. Der oder die Stellmotoren drehen die Windleitplatten WP vorzugsweise in eine Richtung zwischen der durch den Windrichtungsgeber WG ermittelten Windrichtung und der Ausrichtung der Kühlflächen KF.

Die aktive Variante des Einstellsystems ES umfasst vorzugsweise eine elektronische Steuerung für die Stellmotoren, die die Ausrichtung der Windleitplatten WP in Abhängigkeit von der Windrichtung gegebenenfalls individuell steuert. Auf diese Weise kann die Ausrichtung der Windleitplatten WP fein reguliert werden.

Vorzugsweise kann eine Optimierungseinrichtung vorgesehen sein, um die Ausrichtung der Windleitplatten WP abhängig von der Windrichtung und gegebenenfalls von einer Windstärke zu optimieren. Die Optimierung kann hierbei anhand einer Simulation einer Windströmung durch die Windleitplatten WP und den Wärmetauscher RAD erfolgen, z.B. durch numerisches, approximatives Lösen einer Navier-Stokes-Gleichung. Hierbei wird vorzugsweise für eine Menge von Windrichtungen und gegebenenfalls Windstärken jeweils diejenige Ausrichtung der Windleitplatten WP ermittelt, bei der die Geschwindigkeit der Luftströmung über die Kühlflächen KF und damit die Wärmeabfuhr zumindest annähernd maximal wird. Alternativ oder zusätzlich kann die jeweilige Ausrichtung dahingehend optimiert werden, dass die Windströmung möglichst verlustarm umgelenkt wird. Bei der Optimierung können insbesondere auch individuell unterschiedliche Ausrichtungen der Windleitplatten WP berücksichtigt werden. Im laufenden Betrieb stellt die Steuerung dann für eine aktuell ermittelte Windrichtung und gegebenenfalls Windstärke jeweils die als optimal ermittelte Ausrichtung der Windleitplatten WP ein. In Fällen, in denen sich individuell unterschiedliche Ausrichtungen der Windleitplatten WP als vorteilhaft erweisen, können die Windleitplatten WP entsprechend individuell ausgerichtet werden.

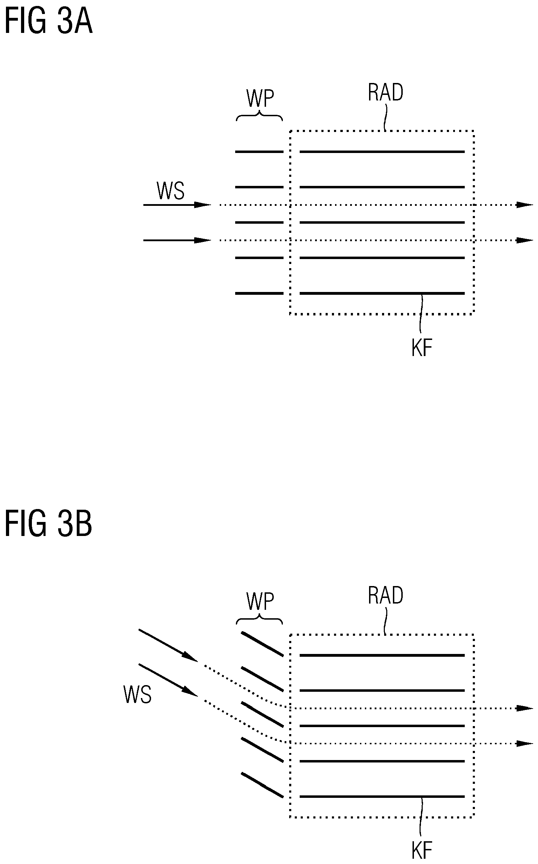

Die Figuren 3A und 3B veranschaulichen unterschiedliche Ausrichtungen der Windleitplatten WP des Wärmetauschers RAD bei unterschiedlichen Windrichtungen relativ zur Ausrichtung der Kühlflächen KF.

Figur 3A veranschaulicht eine Situation, bei der eine Windströmung WS parallel zu den Kühlflächen KF verläuft. In diesem Fall werden die Windleitplatten WP parallel zur Windströmung WS und damit zu den Kühlflächen KF ausgerichtet. Somit wird die Windströmung WS nicht umgelenkt und trifft auf keine nennenswerten Strömungshindernisse, so dass der Wärmetauscher RAD wie durch punktierte Pfeile angedeutet, nahezu optimal durchströmt wird.

Figur 3B veranschaulicht eine Situation, bei der eine Windströmung WS schräg zu den Kühlflächen KF verläuft. Ohne die Windleitplatten WP würde das schräge Auftreffen der Windströmung WS auf die Kühlflächen KF zu einem Luftstau an der Stirnseite des Wärmetauschers RAD führen. Wie Strömungssimulationen zeigen, würde sich hierdurch die Geschwindigkeit der Luftströmung durch den Wärmetauscher RAD und damit die Wärmeabfuhr gegenüber dem in Figur 3A veranschaulichten Fall zum Teil erheblich verringern.

Durch die erfindungsgemäßen Windleitplatten WP wird dagegen die Windströmung WS, wie durch punktierte Pfeile angedeutet, in den Wärmetauscher RAD verlustarm umgelenkt. Die Windleitplatten WP werden hierzu in eine Richtung zwischen der Windrichtung und der Ausrichtung der Kühlflächen KF gedreht. Der jeweilige Drehwinkel kann hierbei anhand einer Simulation der Luftströmung durch die Windleitplatten und den Wärmetauscher RAD, wie oben beschrieben, optimiert werden. Die Strömungssimulationen zeigen, dass die Geschwindigkeit der Luftströmung durch den Wärmetauscher RAD durch geeignet ausgerichtete Windleitplatten WP gegenüber einer Anströmung ohne Windleitplatten erheblich gesteigert werden kann. Durch die gesteigerte Wärmeabfuhr, speziell bei gegenüber der Ausrichtung der Kühlflächen KF geneigten Windrichtungen, kann der Wärmetauscher RAD einer erfindungsgemäßen Kühleinrichtung KF in vielen Fällen kleiner und ressourcenschonender als in herkömmlichen Kühleinrichtungen dimensioniert werden. Insbesondere kann häufig vermieden werden, dass der Wärmetauscher für seltene Extremsituationen und Windverhältnisse ausgelegt werden muss.

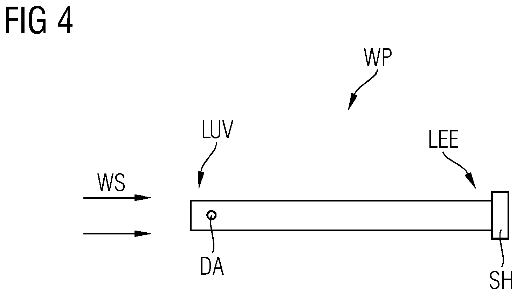

Figur 4 zeigt in schematischer Darstellung eine bewegliche Windleitplatte WP in Aufsicht. Die Windleitplatte WP ist um eine senkrechte Drehachse DA drehbar gelagert. Durch die senkrechte Ausrichtung der Drehachse DA übt das Gewicht der Windleitplatte WP kein nennenswertes Drehmoment um die Drehachse DA aus. Somit ist die Windleitplatte WP in der Regel leicht drehbar, insbesondere durch eine Windströmung WS.

Die Drehachse DA ist bei einer Luv-Kante LUV der Windleitplatte WP positioniert. Die Luv-Kante LUV ist hierbei die von der Windströmung WS angeströmte VorderKante der Windleitplatte WP. Durch die Positionierung der Drehachse DA bei der Luv-Kante LUV wird die Windleitplatte WP durch die Windströmung WS grundsätzlich in Strömungsrichtung gedrückt. Gegebenenfalls kann die Drehachse DA seitlich versetzt, d.h. außerhalb einer Mittelebene der Windleitplatte WP angeordnet werden. Auf diese Weise kann häufig erreicht werden, dass die Windleitplatte WP durch die Windströmung WS in eine gegen die Windrichtung geneigte Richtung gedrückt wird.

Darüber hinaus ist die Windleitplatte WP mit einem Strömungshindernis SH versehen, das bei einer Lee-Kante LEE, d.h. bei einer der Luv-Kante LUV gegenüberliegenden Hinterkante der Windleitplatte WP angeordnet ist. Durch das Strömungshindernis SH wird die Windleitplatte WP durch die Windströmung WS stärker in Strömungsrichtung gedrückt. Alternativ oder zusätzlich kann die Windleitplatte WP, insbesondere in der Nähe der Lee-Kante LEE perforiert werden. Die Perforation erzeugt einen Druckabfall in der Luftströmung, der wie ein Strömungshindernis wirkt.

Durch die vorstehenden Maßnahmen kann die Ausrichtung der Windleitplatte WP durch die Windströmung WS selbst unterstützt werden. Somit muss durch das Einstellsystem ES und/oder die Windfahne weniger Kraft bzw. Drehmoment aufgebracht werden.

Zur Ankopplung des oben beschriebenen Kraftübertragungssystems oder eines Stellmotors kann insbesondere an der Drehachse DA z.B. ein Zahnrad oder ein anders Kraftübertragungselement angeordnet sein. Weiterhin kann an der Drehachse DA ein passives mechanisches Element, wie z.B. eine elastische Feder vorgesehen sein, das ein Drehmoment auf die Windleitplatte WP in Richtung einer zu den Kühlflächen KF parallelen Stellung ausübt.

## Patentansprüche

1. Kühleinrichtung (KE) zum Kühlen einer energietechnischen Anlage (OT), mit
a) einem mit der energietechnischen Anlage (OT) thermisch koppelbaren Wärmetauscher (RAD) zur Wärmeabfuhr durch eine natürliche Windströmung (WS),
b) einer oder mehreren beweglichen, vor einer windzugewandten Seite des Wärmetauschers (RAD) angeordneten Windleitplatten (WP),
c) einem Windrichtungsgeber (WG) zum Ermitteln einer Windrichtung, und
d) einem mit dem Windrichtungsgeber (WG) gekoppelten Einstellsystem (ES) zum Ausrichten einer jeweiligen Windleitplatte (WP) abhängig von der ermittelten Windrichtung, derart dass die Windströmung (WS) in den Wärmetauscher (RAD) umgelenkt wird.

2. Kühleinrichtung nach Anspruch 1, **dadurch gekennzeichnet, dass** die energietechnische Anlage (OT) eine Offshore-Anlage und/oder ein Transformator oder ein Stromrichter ist.

3. Kühleinrichtung nach einem der vorhergehenden Ansprüche, **dadurch gekennzeichnet,**
**dass** der Windrichtungsgeber (WG) eine Windfahne umfasst, und dass ein Kraftübertragungssystem zum Übertragen einer windbedingten Drehung der Windfahne auf eine Drehung einer jeweiligen Windleitplatte (WP) vorgesehen ist.

4. Kühleinrichtung nach einem der vorhergehenden Ansprüche, **gekennzeichnet durch**
einen Stellmotor zum Drehen einer jeweiligen Windleitplatte (WP) abhängig von der vom Windrichtungsgeber (WG) ermittelten Windrichtung.

5. Kühleinrichtung nach einem der vorhergehenden Ansprüche, **dadurch gekennzeichnet,**
**dass** ein Abstand zwischen einer jeweiligen Windleitplatte (WP) und dem Wärmetauscher (RAD) geringer als eine 3fache Breite der jeweiligen Windleitplatte (WP) ist.

6. Kühleinrichtung nach einem der vorhergehenden Ansprüche, **dadurch gekennzeichnet,**
**dass** der Wärmetauscher (RAD) mehrere parallele Kühlflächen (KF) aufweist, vor deren Stirnseiten jeweils eine Windleitplatte (WP) angeordnet ist.

7. Kühleinrichtung nach einem der vorhergehenden Ansprüche, **dadurch gekennzeichnet,**
**dass** mehrere Windleitplatten (WP) in einem gemeinsamen Rahmen (R) angeordnet und gemeinsam bewegbar sind.

8. Kühleinrichtung nach einem der vorhergehenden Ansprüche, **dadurch gekennzeichnet,**
**dass** eine jeweilige Windleitplatte (WP) um eine jeweilige senkrechte Drehachse (DA) drehbar gelagert ist.

9. Kühleinrichtung nach Anspruch 8, **dadurch gekennzeichnet,**
**dass** die jeweilige Windleitplatte (WP) um die jeweilige Drehachse (DA) derart gelagert ist, dass sie sich durch einen Druck der Windströmung (WS) zur Strömungsrichtung hin ausrichtet.

10. Kühleinrichtung nach Anspruch 8 oder 9, **dadurch gekennzeichnet,**
**dass** die jeweilige Drehachse (DA) bei einer Luv-Kante (LUV) der jeweiligen Windleitplatte (WP) positioniert ist.

11. Kühleinrichtung nach einem der Ansprüche 8 bis 10, **dadurch gekennzeichnet,**
**dass** bei einer Lee-Kante (LEE) der jeweiligen Windleitplatte (WP) ein Strömungshindernis (SH) angeordnet ist.

12. Kühleinrichtung nach einem der Ansprüche 8 bis 11, **dadurch gekennzeichnet,**
**dass** eine jeweilige Windleitplatte (WP) perforiert ist.

13. Offshore-Plattform (OP) mit einer energietechnischen Anlage (OT) sowie mit einer Kühleinrichtung (KE) nach einem der vorhergehenden Ansprüche zum Kühlen der energietechnischen Anlage (OT).
